Europäisches Patentamt

European Patent Office

Office européen des brevets

(19)

(11) Veröffentlichungsnummer: **0 332 057**

**A1**

(12) **EUROPÄISCHE PATENTANMELDUNG**

(21) Anmeldenummer: 89103692.3

(22) Anmeldetag: 02.03.89

(51) Int. Cl.⁴: **H02P 6/02**

(30) Priorität: 07.03.88 DE 3807422

(43) Veröffentlichungstag der Anmeldung:
13.09.89 Patentblatt 89/37

(84) Benannte Vertragsstaaten:
AT CH DE FR GB IT LI NL

(71) Anmelder: **Siemens Aktiengesellschaft**
**Wittelsbacherplatz 2**
**D-8000 München 2(DE)**

(72) Erfinder: **Immler, Josef, Dipl.-Ing. (FH)**
**Schwarzäckerstrasse 72**
**D-8031 Puchheim(DE)**

(54) **Schaltungsanordnung zum Ansteuern eines elektronisch kommutierten Gleichstrommotors.**

(57) Bei bekannten Gleichstrommotoren dieser Art mit Motorwicklungen (w1 bis w3) und einem starr gekoppelten Positionsgeber (P) werden aus Rotorpositionssignalen (HS1 bis HS3) Ansteuersignale (GS1 bis GS3) zum zyklischen Ansteuern von Leistungstransistoren (T1 bis T3) decodiert. Diese Signale sollen so ausgebildet sein, daß unerwünschte Spitzen der Wicklungsspannungen vermieden werden.

Den als spannungsgesteuerte Feldeffekttransistoren ausgebildeten Leistungstransistoren (T1 bis T3) ist jeweils ein Gate-Netzwerk zugeordnet, das aus einem Spannungsteiler (z. B. R1, R7) mit Gate-Mittelabgriff und zwischen Betriebsspannung und Masse liegend sowie einem am Mittelabgriff angeschlossenen weiteren Widerstand (z. B. R4) gebildet ist. Als Decodiereinrichtungen sind Analogkomparatoren (N1 bis N3) vorgesehen, deren Ausgänge jeweils mit dem Mittelabgriff über einen der Ausgangswiderstände (R4, R5 bzw. R6) verbunden sind. Den ersten Komparatoreingängen ist gemeinsam eine Referenzspannung (VRef) und den zweiten Eingängen je eines der Positionssignale (HS1, HS2 bzw. HS3) zugeführt, das außerdem an den Mittelabgriff des Gate-Netzwerkes (z. B. R2, R8, R5) des in der zyklischen Folge nachfolgend angesteuerten Leistungstransistors (z. B. T2) angelegt ist.

FIG 1

## Schaltungsanordnung zum Ansteuern eines elektronisch kommutierten Gleichstrommotors

Die Erfindung bezieht sich auf eine Schaltungsanordnung zum Ansteuern eines elektronisch kommutierten Gleichstrommotors gemäß dem Oberbegriff des Hauptanspruches.

Elektronisch kommutierte Gleichstrommotoren, oft auch als bürstenlose Gleichstrommotoren bezeichnet, sind allgemein bekannt. Gewöhnlich bildet ein mehrpoliger Permanentmagnet den Rotor und der Stator weist mindestens drei Polschenkel auf, die zugeordnete Motorwicklungen tragen. Der Motor kann als Innen- oder Außenläufer ausgebildet sein, in jedem Fall besitzt er eine feststehende Sensorplatte als Detektor für die Rotorposition, zumeist mit Hallelementen besetzt, die die jeweilige Position des Rotors feststellen. In Abhängigkeit von der Rotorposition werden die Motorwicklungen selektiv in zyklischer Folge mit Hilfe einer Ansteuerungsschaltung an eine Gleichspannungsquelle angeschlossen.

Ein besonders einfaches Beispiel für eine solche Ansteuerschaltung ist aus US-A-3,942,083 bekannt. Der Gleichstrommotor weist einen Permanentmagneten als Rotor und drei Statorwicklungen auf. Die Rotorposition wird durch drei Hallelemente festgestellt, deren Ausgänge jeweils an die Basis eines von drei Transistoren angeschlossen sind, die ihrerseits als Schaltstufen die Ströme in den Statorwicklungen festlegen. Die unmittelbare Steuerung der Schalttransistoren durch die Ausgangssignale der Hallelemente hat eine relativ "harte'" Kommutierung zur Folge, wodurch sich aufgrund der Induktivität der Motorwicklungen beim Schalten der Ströme hohe Spannungsspitzen ergeben. Bei der bekannten Lösung müssen deshalb Maßnahmen ergriffen werden, um diese Spannungsspitzen abzubauen. Vielfach übliche Maßnahmen zur Regelung der Motordrehzahl, insbesondere für einen schnellen Hochlauf sind im Zusammenhang mit dieser bekannten Lösung nicht offenbart.

In vielen Anwendungsfällen für diese Kleinmotoren ist aber eine drehzahl- und oft auch drehrichtungsabhängige Regelung erforderlich. Eine Umkehr der Drehrichtung ist durch die Umkehrung der zyklischen Folge der Erregung der Motorwicklungen gegeben. Für die Drehzahlregelung bestehen die beiden Möglichkeiten, die Zeitdauer der Erregung einer Motorwicklung bei im wesentlichen konstantem Strom bzw. den Wicklungsstrom bei im wesentlichen konstanter Zeitdauer der Erregung zu verändern.

Beispiele für den ersteren Lösungsansatz sind aus US-A-4,250,544 bzw. aus US-A-4,368,411 bekannt. Hier werden im wesentlichen die Vorteile digitaler Steuerungstechnik unter Verwendung von Speichereinrichtungen bzw. programmierbaren Steuerungen eingesetzt, um im jeweiligen Anwendungsfall eine der aktuellen Betriebsweise des Gleichstrommotors angepaßte Kommutierung zu erreichen. Der Ansteuerungsaufwand ist allerdings dabei erheblich. Weiterhin ist zu berücksichtigen, daß mit einer rein digitalen Ansteuerung das Problem der "harten" Kommutierung allein nicht zu lösen ist.

Der andere erwähnte Lösungsansatz für eine drehzahlabhängige Steuerung über die veränderliche Amplitude der Wicklungsströme bietet hier an sich einen besseren Lösungsansatz. Eingesetzt werden im wesentlichen linear ausgesteuerte Leistungstransistoren zur Einstellung der Ströme in den Motorwicklungen, dies bedingt aber seinerseits eine analoge Ansteuerung dieser Leistungstransistoren. Ein Beispiel für diesen Lösungsweg ist aus US-A-4,675,583 bekannt. Bei dieser Ansteuerschaltung werden die den Motorwicklungen zugeordneten Leistungstransistoren einzeln und in zyklischer Folge mit Hilfe eines Analog-Multiplexers angesteuert, der seinerseits in Abhängigkeit von Positionssignalen gesteuert wird, die von Positionsgebern, insbesondere Hallelementen erzeugt werden.

Der geschilderte Stand der Technik verdeutlicht, daß oftmals erhebliche Anstrengungen unternommen werden, um eine präzise, möglichst trägheitslose drehzahl-, oft auch drehrichtungsabhängige Ansteuerung von bürstenlosen Gleichstrommotoren zu erzielen. Die Verwirklichung dieser Ziele ist unter anderem erschwert durch die Induktivität der Motorwicklungen, die die Ursache für unerwünschte Spannungsspitzen beim schnellen, insbesondere abrupten Schalten der Wicklungsströme sind. Dazu kommt noch, daß in der Ansteuerschaltung für Gleichstrommotoren dieser Art häufig Halbleiter-Schaltelemente eingesetzt werden, die nur eine begrenzte Durchschlagsfestigkeit aufweisen. Andererseits wird auch in den Geräten, in denen diese Gleichstrommotoren eingesetzt werden, häufig eine Gleichstromquelle mit begrenzter Gleichspannung verwendet. Auch dieser Umstand hat in Verbindung mit der Motorkonstruktion zur Folge, daß die Amplituden der Wicklungsströme nicht beliebig hoch gelegt werden können, ohne daß unerwünschte Nebeneffekte auftreten.

Der vorliegenden Erfindung liegt daher die Aufgabe zugrunde, eine Schaltungsanordnung zum Ansteuern eines kommutatorlosen Gleichstrommotors zu schaffen, die bei einfachem Aufbau unter Verwendung handelsüblicher Schaltkreise eine präzise, möglichst trägheitsarme, vorzugsweise drehzahlabhängige Kommutierung des Gleichstrommotors in der Weise gestattet, daß unerwünschte überhöhte Spannungsspitzen beim Schalten der Wicklungsströme von vornherein nur noch in einem Umfang auftreten, der durch einfache, für den Betrieb unkritische Maßnahmen beherrschbar ist.

Diese Aufgabe wird bei einer Schaltungsanordnung der eingangs genannten Art erfindungsgemäß durch die im Kennzeichen des Hauptanspruches beschriebenen Merkmale gelöst.

Erfindungsgemäß werden die FET-Leistungstransistoren, mit denen die Ströme in den Motorwicklungen geschaltet werden, ihrerseits in Verbindung mit einem Gate-Netzwerk durch Analog-Komparatorstufen angesteuert, die auf einfache Weise die von den Hallsonden abgegebenen Positionssignale decodieren und eine geregelte Ansteuerung der Leistungstransistoren übernehmen.

Trotz dieses mit geringem Aufwand erreichten einfachen Aufbaus ermöglicht diese Ansteuerschaltung eine "sanfte" Kommutierung. Damit ist gemeint, daß der jeweils stromführende Leistungstransistor nicht abrupt abgeschaltet wird, was in dem geschalteten Strompfad hohe Spannungsspitzen zur Folge hätte. Vielmehr ist die Ansteuerung der Leistungstransistoren derart ausgelegt, daß in einem abzuschaltenden Leistungstransistor der Schaltwiderstand langsam ansteigt, so daß der so gesteuerte Wicklungsstrom während einer Zeitspanne absinkt, die der Strom in der nun übernehmenden Motorwicklung aufgrund der Induktivität dieser Wicklung ohnehin benötigt, um seinen Endwert zu erreichen. Dabei ist die Schaltung derart ausgelegt, daß die Summe der beiden Wicklungsströme immer einem festgelegten Nennwert entspricht. Der Eingangsstromkreis, d. h. die durch die Ansteuerschaltung belastete Gleichstromquelle liefert somit im wesentlichen konstanten Strom, so daß hier zusätzliche Maßnahmen zum Schutz vor Impulsbelastung nicht erforderlich sind.

Weiterbildungen der Erfindung sind in Unteransprüchen beschrieben und sind mit ihren Eigenschaften und Vorteilen im übrigen in der Beschreibung eines Ausführungsbeispieles der Erfindung näher erläutert.

Ein solches Ausführungsbeispiel der Erfindung wird im folgenden anhand der Zeichnung näher erläutert. Dabei zeigt:

FIG 1 ein Schaltbild einer erfindungsgemäß ausgebildeten Schaltungsanordnung zum Ansteuern eines elektronisch kommu tierten Gleichstrommotors, dessen Motorwicklungen über FET-Leistungstransistoren angesteuert werden und der einen aus Hallsonden aufgebauten Positionsgeber besitzt,

FIG 2 in schematischer Form Impulsdiagramme der von den Hallsonden abgegebenen Hallsondensignale,

FIG 3 Impulsdiagramme der entsprechenden Transistorströme,

FIG 4 Impulsdiagramme der Gate-Spannungen zum Ansteuern der FET-Leistungstransistoren und

FIG 5 einen Signalverlauf für die Spannung an einer der Motorwicklungen.

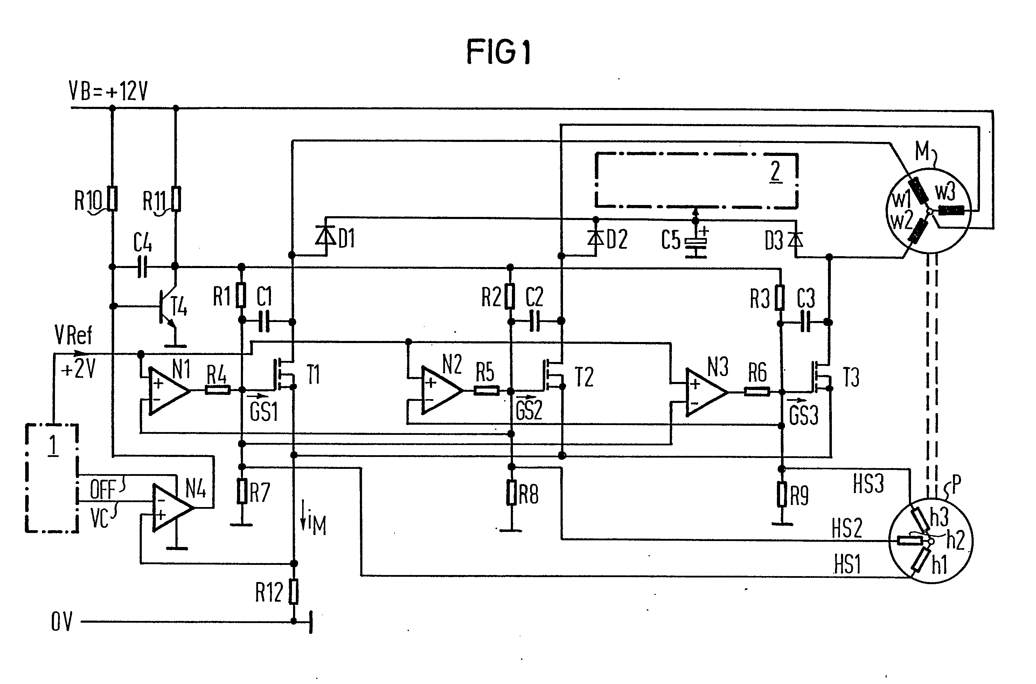

In FIG 1 ist schematisch ein kommutatorloser Gleichstrommotor M mit seinen drei Motorwicklungen w1, w2, w3 dargestellt. Die Motorwicklungen sind zu einem Stern geschaltet, wobei am Sternpunkt eine positive Betriebsspannung VB = 12 V angelegt ist. Weiterhin ist schematisch ein mit dem Gleichstrommotor M starr gekoppelter Positionsgeber P angedeutet, der drei, zueinander um 120° (elektrisch) versetzt angeordnete Hallsonden h1 bis h3 mit offenem Kollektorausgang aufweist. Von den Hallsonden abgegebene Hallsondensignale HS1 bis HS3 werden verarbeitet, um die Motorwicklungen w1 bis w3 in zyklischer Folge in Abhängigkeit von der jeweiligen Rotorposition zu erregen.

Für die Erregung der Motorwicklungen ist an jede dieser Motorwicklungen an dem dem Sternpunkt gegenüberliegenden Ende jeweils einer von drei FET-Leistungstransistoren T1 bis T3 angeschlossen. Die Leistungstransistoren sind bezüglich ihrer Stromkanäle parallel geschaltet und liegen gemeinsam über einen Meßwiderstand R12 an Masse, die - wie schematisch angegeben ist - auf 0 V gehalten wird.

Die Gate-Elektroden der drei FET-Leistungstransistoren T1 bis T3 sind gleichartig beschaltet. Jede Gate-Elektrode liegt am Mittelabgriff jeweils eines Spannungsteilers bestehend aus zwei Widerständen R1, R2 bzw. R3 und R7, R8 bzw. R9. Diese Spannungsteiler liegen einerseits über einen gemeinsamen Vorwiderstand R11 an der positiven Betriebsspannung VB und andererseits an Masse. Außerdem ist die Gate-Elektrode jeweils über einen weiteren Ausgangswiderstand R4, R5 bzw. R6 an den Ausgang eines zugeordneten Analog-Komparators N1, N2 bzw. N3 angeschlossen. Die Komparatoren sind als Differenzspannungsverstärker mit offenem Kollektorausgang ausgebildet, deren ersten, positiven Eingängen parallel ein Referenzspannungssignal VREF von beispielsweise 2 V aus einer externen Steuerung 1 zugeführt ist.

Um die FET-Leistungstransistoren T1, T2 bzw. T3 in zyklischer Vertauschung über entsprechende Gate-Signale GS1, GS2 bzw. GS3 ansteuern zu können, ist jeweils eines der Hallsondensignale HS1 bis HS3 der Gate-Elektrode des ersten, zweiten bzw. dritten FET-Leistungstransistors T1, T2 bzw. T3 direkt und außerdem in zyklischer Vertauschung den zweiten, invertierenden Eingängen derjenigen Komparatoren zugeführt, die - elektrisch betrachtet - der vorhergehenden Leistungstransistorstufe zugeordnet sind. D. h. beispielsweise, daß das zweite Hallsondensignal HS2 einmal direkt der Gate-Elektrode der zweiten Transistorstufe T2 und außerdem invertierend über den ersten Komparator N1 der GateElektrode der ersten Transistorstufe T1 zugeführt ist. Analoges gilt für die beiden anderen Hallsondensignale HS1 bzw. HS3.

Um eine drehzahlgeregelte Ansteuerung des Gleichstrommotors M zu erzielen, liefert die externe Steuerung 1 eine drehzahlabhängige Sollspannung VC, die dem invertierenden Eingang eines weiteren Komparators N4 zugeführt ist. Auch dieser Komparator ist als Differenzspannungsverstärker ausgebildet, dessen positivem Eingang als Meßgröße eine am Meß widerstand R12 aufgrund des momentanen Motorstromes $i_M$ abfallende Spannung zugeführt ist. Als invertierender Stromverstärker ist ein weiterer Transistor T4 vorgesehen, dessen Basis einerseits über einen Basiswiderstand R10 an der positiven Betriebsspannung VB liegt und andererseits an den Ausgang des weiteren Komparators N4 angeschlossen ist. Die Kollektor-Emitter-Strecke dieses weiteren Transistors ist über den genannten Vorwiderstand R11 zwischen der positiven Betriebsspannung VB und Masse angeordnet. Der Vorwiderstand R11 ist gegenüber dem Basiswiderstand R10 niederohmig.

Schließlich ist in FIG 1 schematisch noch eine weitere Steuerung angedeutet, die als Rückhol- und Bremssteuerung 2 bezeichnet ist. Eine derartige Steuerung ist in den Fällen üblich, bei denen ein solcher kommutatorloser Gleichstrommotor z. B. als Antrieb für die Spindel eines Magnetplattenspeichers dient. Die in dem Spindelantrieb gespeicherte kinetische Energie wird beim Stillsetzen und bei Störungen, insbesondere beim Ausfall der Betriebsspannung dazu benutzt, eine im Plattenspeichergerät weiterhin vorgesehene Positioniereinrichtung in eine vorgegebene Ruhestellung zurückzuführen und zugleich den Spindelantrieb abzubremsen. Derartige Steuerungen sind für z. B. den genannten Anwendungsfall an sich bekannt.

Diese Rückhol- und Bremssteuerung 2 ist im vorliegenden Fall lediglich deshalb von Interesse, weil die drei Motorwicklungen w1 bis w3 über je eine Entkoppeldiode D1, D2 bzw. D3 an einen Ladekondensator C4 angeschlossen sind, der andererseits geerdet ist und über die Rückhol- und Bremssteuerung 2 entladbar ist. Höhere Spannungsspitzen, die sich während des Hochlaufens des Gleichstrommotors nicht völlig vermeiden lassen, werden durch dieses Netzwerk, bestehend aus den Entkoppeldioden D1 bis D3 und dem Ladekondensator C5, soweit noch erforderlich, aufgefangen.

Im übrigen ist jeweils zwischen der Gate-Elektrode und der Drainelektrode der FET-Leistungstransistoren T1 bis T3 ein Glättungskondensator C1, C2 bzw. C3 angeordnet, der für ein Verschleifen der Flanken der Stromimpulse des zugeordneten Leistungstransistors während des Ein- und Ausschaltevorganges sorgt. Ein ähnlicher Glättungskondensator C4, angeordnet zwischen dem Kollektor und der Basis des weiteren Transistors T4, dämpft die Steuerwirkung dieses die Stromregelung bestimmenden Transistors in ähnlicher Form.

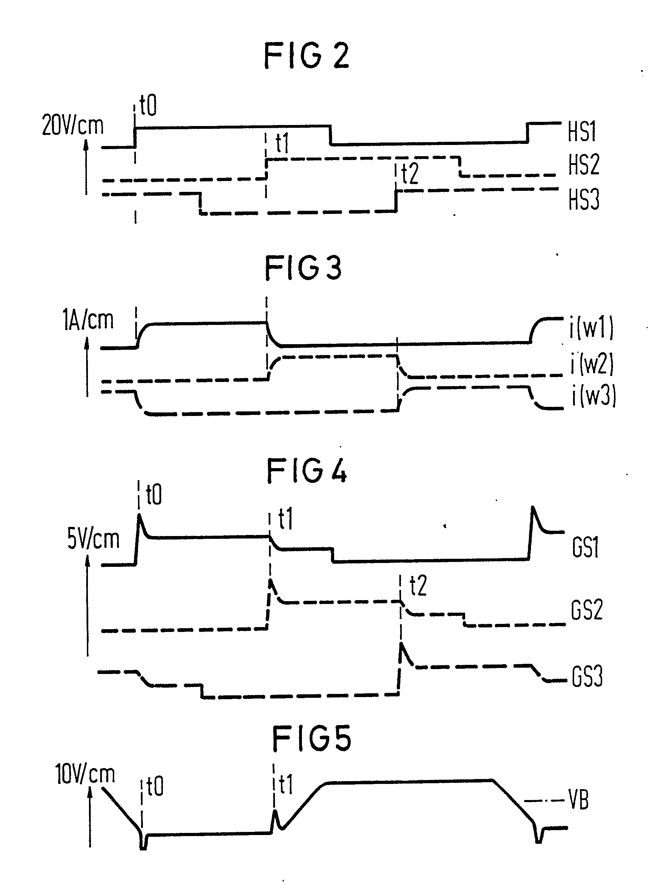

Nachfolgend wird die Wirkungsweise dieser anhand von FIG 1 im einzelnen erläuterten Schaltungsanordnung unter Zugrundelegung der in den FIG 2 bis 5 dargestellten Impulsdiagramme näher erläutert. Dabei soll zunächst vereinfachend die statische Funktion der Schaltungsanordnung betrachtet werden. Unter der statischen Funktion wird hier der Fall einer Ansteuerung mit einer vorgegebenen Nenndrehzahl angesehen und für die vereinfachende Beschreibung der statischen Funktion angenommen, der Transistor T4 würde ständig gesperrt. In FIG 2 sind in schematischer Form die Ausgangssignale des Positionsgebers, d. h. die Hallsondensignale HS1 bis HS3 dargestellt, deren Phasenlage zueinander 120° (elektrisch) beträgt. FIG 2 illustriert lediglich eine Periode für diese im laufenden Betrieb kontinuierlich erzeugten Impulsfolgen.

In einem Anwendungsfall ohne Drehzahlregelung ändert beispielsweise zu einem Zeitpunkt t0 gemäß FIG 2 das Ausgangssignal HS1 der Hallsonde h1 seinen Funktionszustand und bewirkt am Gate des ersten FET-Leistungstransistors T1 einen Spannungsanstieg, der nach Überschreiten seiner Schwellenspannung zu einer entsprechenden Erniedrigung seines Kanalwiderstandes führt, so daß sich so die in FIG 3 dargestellte Stromkurve i (w1) für die Motorwicklung w1 ergibt.

Zu einem Zeitpunkt t1 ändert das Ausgangssignal HS2 der zweiten Hallsonde h2 seinen Signalzustand und nimmt dabei hohen Pegel an. Dieses Signal ist dem invertierenden Ein gang des ersten Komparators N1 zugeführt und bewirkt nun am Gate des ersten FET-Leistungstransistors T1 ein Herabsetzen der Gate-Spannung. Rein digital betrachtet läßt sich diese Funktion vereinfachend durch die Beziehung:
$$GS1 = HS1 \bullet \overline{HS2}$$
ausdrücken, wobei das Gate-Signal GS1 das Summensignal aus dem ersten Hallsondensignal HS1 und dem durch den Komparator N1 invertierten zweiten Hallsondensignal HS2 ist. Diese ideal digitale Signalbedingung wäre am Gate des ersten FET-Leistungstransistors T1 bei einem - wie vorausgesetzt ständig gesperrten weiteren Transistor T4 dann exakt erfüllt, wenn der Ausgangswiderstand R4 des ersten Komparators N1 kurzgeschlossen wäre.

Aufgrund der vorstehend ausgeführten Funktion des Komparators N1 sinkt also nach dem Zeitpunkt t1 das Gate-Signal GS1 ab, was einen Stromabfall im angesteuerten FET-Leistungstransistor T1 zur Folge hat. Zur gleichen Zeit steigt das den zweiten FET-Leistungstransistor T2 aussteuernde Gate-Signal GS2 an, so daß nun der Motorstrom $i_M$ in diese Schaltstufe mehr und mehr übernommen wird, bis schließlich diese Leistungsstufe vollen Motorstrom zieht und der erste FET-Leistungstransistor T1 vollständig gesperrt ist. Zum Zeitpunkt t2 wiederholen sich die beschriebenen Vorgänge in analoger Form, wobei nun das dritte Hallsondensignal HS3 neben dem zweiten Hallsondensignal HS2 die steuernde Funktion übernimmt.

Vereinfachend wurden vorstehend die dynamischen Einflüsse ausgeklammert. Der dynamische Fall schließt die Drehzahlregelung des angesteuerten Gleichstrommotors M ein. Für diesen Einsatzfall wird die Amplitude der Gatesignale GS1 bis GS3 verändert, um den Momentanwert des Motorstromes $i_M$ über die FET-Leistungstransistoren T1 bis T3 zu steuern. Dies geschieht mit Hilfe des vierten Komparators N4 in Verbindung mit dem weiteren Transistor T4. Entsprechend dem Momentanwert des Motorstromes $i_M$ fällt am Meßwiderstand R12 eine definierte Spannung ab. Diese Spannung wird dem positiven Eingang des vierten Komparators N4 zugeführt und in diesem Komparator mit der von der externen Steuerung 1 gelieferten Sollspannung VC verglichen. Diese Sollspannung entspricht in ihrer Amplitude einem momentanen Sollwert des Motorstromes $i_M$, daß aus dem Vergleich mit der am Meßwiderstand R12 abfallenden Spannung am Ausgang des vierten Komparators N4 ein dem Differenzsignal entsprechendes Ausgangssignal abgegeben wird. Damit wird die Basis des weiteren Transistors T4 angesteuert. Der Kollektorwiderstand R11 dieses weiteren Transistors ist im Verhältnis zu seinem Basiswiderstand R10 niederohmig, so daß der Transistor T4 als invertierender Stromverstärker für Ausgangssignale des vierten Komparators N4 wirkt. Beispielsweise ist während des Hochlaufens des angesteuerten Gleichstrommotors M die Differenzspannung am Eingang des vierten Komparators N4 relativ hoch, aufgrund der Stromverstärkung des weiteren Transistors T4 werden so hohe Amplituden für die Gate-Signale GS1, GS2 bzw. GS3 der FET-Leistungstransistoren erzeugt, deren Amplitudenwerte sich wieder verringern, sobald sich der angesteuerte Gleichstrommotor M seiner Nenndrehzahl annähert.

Hinzuzufügen ist, daß die externe Steuerung ein Ausgangssignal OFF an den vierten Komparator N4 als Versorgungsspannung abgibt. Sobald dieses Signal auf den Niedrigpegel geschaltet wird, sperrt die Ausgangstransistorstufe des vierten Komparators. Damit wird über den weiteren Transistor T4 bewirkt, daß die Gate-Signale GS1, GS2 und GS3 auf 0 V abfallen. So ist unabhängig von der Betriebsspannung VB der Gleichstrommotor M abgeschaltet.

Betrachtet wird nun der dynamische Betriebsfall im einzelnen anhand der Spannungsverläufe der in FIG 4 dargestellten Gate-Signale GS1, GS2 und GS3. Tritt zum Zeitpunkt t1 die positive Flanke des zweiten Hallsondensignales HS2 auf, wird der Einschaltvorgang des zweiten FET-Leistungstransistors T2 ausgelöst. Die interne Eingangskapazität dieses spannungsgesteuerten Leistungstransistors wird nun über den ,als Kollektorwiderstand des weiteren Transistors T4 geschalteten Vorwiderstand R11 und den Widerstand R2 des Gate-Spannungsteilers aufgeladen. Zum gleichen Zeitpunkt beginnt der erste Komparator N1 über seinen Ausgangswiderstand R4 die Eingangskapazität des ersten FET-Leistungstransistors T1 zu entladen. Der zweite FET-Leistungstransistor T2 beginnt erst dann Strom zu übernehmen, wenn das sich so bildende zweite Gate-Signal GS2 höher ist als seine Eingangsschwellenspannung. Da der Strom in der nun angesteuerten Motorwicklung w2 wegen ihrer Induktivität nicht schlagartig ansteigen kann, wird nun über die insbesondere durch den vierten Komparator N4 und den angeschlossenen Transistor T4 gebildete Stromregelung die Kollektorspannung an diesem Transistor erhöht und zugleich ein Absinken des ersten Gate-Signales GS1 verzögert. Dadurch entsteht kurz nach dem Zeitpunkt T1 eine Spannungsspitze beim zweiten Gate-Signal GS2. Diese erwünschte Spannungsspitze wird über die Stromregelung schnell wieder abgebaut, denn sie verhindert, daß die Summe der in den beiden Motorwicklungen w1 und w2 fließenden Wicklungsströme den durch die Sollspannung VC vorgegebenen Motornennstrom übersteigt.

Durch die Dimensionierung des Gate-Netzwerkes, bestehend aus dem Ausgangswiderstand z. B. R4 des zugeordneten Komparators z. B. N1 und den Widerständen z. B. R1, R7 des Gate-Spannungsteilers, im Hinblick auf die Größe der Eingangskapazität des FET-Leistungstransistors z. B. T1 hat man es in der Hand, die Entladezeit für diese Eingangskapazität an die Stromanstiegszeit im übernehmenden FET-Leistungstransistor z. B. T2 anzupassen. So ergeben sich die in FIG 3 gezeigten Stromkurven i (w1) bzw. i (w2) mit den gegenläufigen Flanken nach dem Zeitpunkt t1. Außerdem stellt die Dimensionierung dieser genannten Widerstandskombination sicher, daß das Gate-Signal z. B. GS1 nach diesem Entladezeitraum unter die Schwellenspannung des FET-Leistungstransistors z. B. T1 absinkt.

In FIG 5 ist nun die Auswirkung dieses Schaltverhaltens der FET-Leistungstransistoren auf die angeschlossene Motorwicklung am Beispiel der Motorwicklung w1 dargestellt. FIG 5 zeigt den Spannungsverlauf an dieser Motorwicklung. Zu den Zeitpunkten, z. B. t0, an denen die Spannungsspitzen des zugeordneten Gate-Signales GS1 auftreten, ergibt sich eine geringfügige negative Spannungsspitze, die schnell wieder abgebaut wird. Während der Erregungsphase der Motorwicklung ist die anstehende Spannung im wesentlichen konstant und zeigt wiederum eine geringfügige, nun positive Spannungsspitze zum Zeitpunkt t1 als Folge der gesteuerten Abschaltung des FET-Leistungstransistors T1. Anschließend steigt die Spannung an der Motorwicklung w1 im wesentlichen linear an und erreicht ein breites Maximum während der Ausschaltphase der Wicklung.

Dieser Spannungsverlauf ist auch für die übrigen Motorwicklungen w2 und w3 zeitlich versetzt identisch, denn alle drei Phasen weisen das gleiche Ansteuerungsnetzwerk auf. Die in FIG 5 illustrierte Impulsform illustriert, daß zu den Ein- bzw. Ausschaltzeitpunkten im geregelten Betrieb keine kritischen Spannungsspitzen auftreten und die geringfügigen kurzzeitigen Spannungsveränderungen schnell wieder abgebaut werden. Während des schnellen Hochlaufens des drehzahlgeregelten Gleichstrommotors M können allerdings etwas höhere Spannungsspitzen auftreten, die aber dann, wie erwähnt, von dem Ladekondensator C5 abgefangen werden.

## Ansprüche

1. Schaltungsanordnung zum Ansteuern eines elektronisch kommutierten Gleichstrommotors (M) mit Motorwicklungen (w1 bis w3) und einem starr gekoppelten Positionsgeber (P), der zeitlich versetzte Rotorpositionssignale (HS1 bis HS3) abgibt, aus denen mit einer Decodiereinrichtung (N1 bis N3) Ansteuersignale (GS1 bis GS3) zum zyklischen Ansteuern von Leistungstransistoren (T1 bis T3) abgeleitet werden, die jeweils in den zwischen einer Betriebsspannung (VB) und Masse liegenden Strompfad einer der Motorwicklungen eingeschaltet sind, **dadurch gekennzeichnet,** daß die Leistungstransistoren als spannungsgesteuerte Feldeffekttransistoren ausgebildet sind, denen jeweils ein Gate-Netzwerk zugeordnet ist, das aus einem Spannungsteiler (z. B. R1, R7) mit Gate-Mittelabgriff und zwischen Betriebsspannung und Masse liegend sowie einem am Mittelabgriff angeschlossenen weiteren Widerstand (z. B. R4) gebildet ist und daß als Decodiereinrichtung Analogkomparatoren (N1 bis N3) vorgesehen sind, deren Ausgänge jeweils mit dem Mittelabgriff über einen der Ausgangswiderstände (R4, R5 bzw. R6) verbunden sind, deren ersten Eingängen gemeinsam eine Referenzspannung (VRef) und deren zweiten Eingängen je eines der Positionssignale (HS1, HS2 bzw. HS3) zugeführt ist, das außerdem an den Mittelabgriff des Gate-Netzwerkes (z. B. R2, R8, R5) des in der zyklischen Folge nachfolgend angesteuerten Leistungstransistors (z. B. T2) angelegt ist.

2. Schaltungsanordnung nach Anspruch 1, **dadurch gekennzeichnet,** daß der Positionsgeber (P) Positionsgeberelemente (h1 bis h3), insbesondere als Halleelemente ausgebildet, aufweist, die ebenso wie die Analogkomparatoren (N1 bis N3) Ausgangsstufen mit offenem Kollektorausgang aufweisen.

3. Schaltungsanordnung nach Anspruch 1 oder 2, **da durch gekennzeichnet,** daß jedem Leistungstransistor (T1, T2 bzw. T3) ein Glättungskondensator (C1, C2 bzw. C3) zugeordnet ist, der zwischen dessen Gate-und Drainanschluß angeschlossen ist.

4. Schaltungsanordnung nach einem der Ansprüche 1 bis 3 zum drehzahlgeregelten Ansteuern des Gleichstrommotors (M), **gekennzeichnet durch** einen in dem allen Motorwicklungen (w1 bis w3) gemeinsamen Strompfad angeordneten Meßwiderstand (R12) zum Abgreifen eines dem Momentanwert des Motorstromes ($i_M$) entsprechenden Spannungswertes, durch einen weiteren Analogkomparator (N4), dessen erstem Komparatoreingang dieser am Meßwiderstand abgegriffene Spannungswert und dessen zweitem Komparatoreingang eine extern erzeugte Sollspannung (VC) zugeführt ist, die einem momentanen Sollwert des Motorstromes entspricht und durch eine am Ausgang dieses weiteren Analogkomparators angeordnete Verstärkerstufe (T4, R10, R11), deren Ausgang parallel mit den dem Masseanschluß gegenüberliegenden Anschlüssen der Spannungsteilern (R1, R7; R2, R8 bzw. R3, R9) der Gate-Netzwerke verbunden ist.

5. Schaltungsanordnung nach Anspruch 4, **dadurch gekennzeichnet,** daß alle Analogkomparatoren (N1 bis N4) als Differenzspannungsverstärker ausgebildet sind, wobei die ersten Eingänge den positiven und die zweiten Eingänge den invertierenden Eingängen der Differenzspannungsverstärker entsprechen.

6. Schaltungsanordnung nach Anspruch 4 oder 5, **dadurch gekennzeichnet,** daß die Verstärkerstufe aus einem weiteren Transistor (T4) mit einem Kollektor, der an die der Masseverbindung gegenüberliegenden Anschlüsse der Gate-Spannungsteiler (R1, R7; R2, R8 bzw. R3, R9) angeschlossen ist, aus einem Basiswiderstand (R10) und aus einem in bezug auf diesen wesentlich niedrigeren Kollektorwiderstand (R11) besteht, die beide an Betriebsspannung (VB) liegen, so daß diese Verstärkerstufe in bezug auf das Ausgangssignal des zugeordneten weiteren Analogkomparators (N4) als invertierender Stromverstärker ausgebildet ist.

7. Schaltungsanordnung nach einem der Ansprüche 4 bis 6, **dadurch gekennzeichnet,** daß dem weiteren Analogkomparator (N4) eine externe Versorgungsspannung (OFF) zugeführt ist und dieser Analogkomparator eine Ausgangsstufe aufweist, die bei Abschalten der Versorgungsspannung hochohmig wird und damit über die Verstärkerstufe (T4, R10, R11) die Leistungstransistoren (T1, T2, T3) sperrt.

8. Schaltungsanordnung nach einem der Ansprüche 1 bis 7, **dadurch gekennzeichnet,** daß die Motorwicklungen (w1 bis w3) über je eine Entkoppeldiode (D1 bis D3) an einen Ladekondensator (C5) angeschlossen sind, der durch Spannungsspitzen an den Motorwicklungen aufgeladen wird und extern entladbar ist.

FIG 1

FIG 2

FIG 3

FIG 4

FIG5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | EP-A-0 186 850 (SIEMENS AG) --- | | H 02 P 6/02 |
| A,D | US-A- 368 411 (H.K. KIDD) --- | | |
| A,D | US-A-4 250 544 (R.P. ALLEY) --- | | |
| A,D | US-A-3 942 083 (T. TAKAHASHI) --- | | |
| A | EP-A-0 043 138 (SIEMENS AG) * Figur 1; Zusammenfassung; Ansprüche 1,2 * --- | 1,2 | |
| A | PATENT ABSTRACTS OF JAPAN, Band 11, Nr. 59 (E-482)[2506], 24. Februar 1987; & JP-A-61 218 390 (HITACHI LTD) 27-09-1986 * Zusammenfassung * --- | 1 | |
| A | US-A-3 911 338 (Y. IGARASHI et al.) * Figur 1; Zusammenfassung * --- | 1 | |
| A | EDN - ELECTRICAL DESIGN NEWS, Band 32, Nr. 18, 3. September 1987, Seiten 227-234, Newton, MA, US; D. ARTUSI et al.: "Solid-state devices ease task of designing brushless dc motors" * Figur 1 * ----- | 1 | RECHERCHIERTE SACHGEBIETE (Int. Cl.4)<br><br>H 02 P |

Der vorliegende Recherchenbericht wurde für alle Patentansprüche erstellt

| Recherchenort | Abschlußdatum der Recherche | Prüfer |
|---|---|---|
| DEN HAAG | 02-06-1989 | BEYER F. |